# EUROPÄISCHE PATENTSCHRIFT

(11) **EP 1 726 972 B1**
(45) Veröffentlichungstag und Bekanntmachung des Hinweises auf die Patenterteilung: **24.03.2010**
(21) Anmeldenummer: 06010127.6
(22) Anmeldetag: 17.05.2006
(51) Int. Cl.: G01S 13/93, G01S 13/44, H01Q 21/06, H01Q 1/32

(54) **Kraftfahrzeug-Radarsystem und Verfahren zum Betrieb eines Kraftfahrzeug-Radarsystems**
Motor vehicle radar system and method for operating such a system
Système de radar automobile et procédé destiné au fonctionnement d'un système de radar automobile

(30) Priorität: 20.05.2005 DE 102005023432
(43) Veröffentlichungstag der Anmeldung: 29.11.2006
(73) Patentinhaber: Valeo Schalter und Sensoren GmbH, 74321 Bietigheim-Bissingen (DE)
(72) Erfinder: Haberland, Udo, Dr., 71088 Holzgerlingen (DE)
(74) Vertreter: Pothmann, Karsten

(56) Entgegenhaltungen:
- EP-A- 0 947 852
- EP-A- 1 522 869
- WO-A-2004/051308
- US-A- 5 815 112
- US-A1- 2004 119 633
- US-A1- 2004 164 892
- US-B1- 6 266 005
- US-B1- 6 266 010
- US-B1- 6 404 328
- QIAN Y ET AL: "Reconfigurable leaky-mode/multifunction patch antenna structure" ELECTRONICS LETTERS, IEE STEVENAGE, GB, Bd. 35, Nr. 2, 21. Januar 1999 (1999-01-21), Seiten 104-105, XP006011679 ISSN: 0013-5194

## Beschreibung

Die Erfindung betrifft ein Kraftfahrzeug-Radarsystem zur Bestimmung von Winkellage und/oder Ausdehnung und/oder Entfernung von Objekten in der Umgebung eines Kraftfahrzeugs, mit mindestens einer Sendestruktur und mit mindestens einer Empfangsstruktur, wobei die Empfangsstruktur zur Erfassung der horizontalen Winkellage und/oder Ausdehnung eines Objekts in der Umgebung des Kraftfahrzeugs mindestens zwei im Wesentlichen parallel zueinander angeordnete, benachbarte Antennenstrukturen aufweist, wobei jede Antennenstruktur mindestens zwei zueinander versetzte Antennenelemente aufweist, wobei zur Auswertung von Empfangssignalen eine Auswerteeinheit vorgesehen ist.

Die Erfindung betrifft ferner ein Verfahren zum Betrieb eines solchen Radarsystems.

Bei Kraftfahrzeugen werden Radarsensoren zur Überwachung der Fahrzeugumgebung eingesetzt, wobei Anwendungen wie Einparkhilfe, Totwinkelüberwachung, Spurwechselassistenz, Türöffnungsassistenz, eine Umfall-Antizipierung (pre-crashsensing) für eine Airbag-Auslösung, Gurtstraffung, Überrollbügel-Aktivierung, Start/Stop-Betrieb oder Fahrbetrieb mit Abstandsüberwachung und/oder Abstandsregelung (Cruise control-Unterstützung) in Frage kommen.

Im Umfeld der Fahrzeuge sind typischerweise mehrere Objekte (Fahrzeuge, Leitplanken, Kanaldeckel, Brücken) vorhanden. Um dem Fahrer oder einem Fahrerassistenzsystem eine Einschätzung der Situation zu ermöglichen, muss zusätzlich zur Entfernung auch die Winkelposition reflektierender oder streuender Objekte bestimmt werden. Eine Unterdrückung von Infrastruktur, also zum Beispiel von ortsfesten Objekten wie Kanaldeckel oder Brücken, stellt eine weitere wichtige Anforderung an ein Kraftfahrzeug-Radarsystem dar.

Um zuverlässig feststellen zu können, ob ein Objekt den Weg eines Kraftfahrzeugs blockiert oder nicht, ist eine Erfassung, die nur auf die horizontale Winkellage gerichtet ist, vielfach nicht ausreichend. Es ist insbesondere wünschenswert, Objekte wie Kanaldeckel, Brücken oder an Brücken angeordnete Hinweisschilder oder -tafeln erfassen zu können und als Objekt bewerten zu können, das nicht im Weg des Kraftfahrzeugs liegt.

Zur Erfassung von vertikalen Winkellagen oder Ausdehnungen von Objekten ist aus der US 6,266,005 B1 bekannt, ein System, das zur Erfassung der horizontalen Winkellage geeignet ist, im Wesentlichen unverändert zu lassen und die Informationen zur vertikalen Winkellage oder Ausdehnung eines Objekts aus der Verarbeitung der Empfangssignale, die die horizontale Winkellage betreffen, zu gewinnen. Hierzu wird ein Interferenzmuster analysiert, das sich aus der Überlagerung von zwei Wellenmustern ergibt. Ein erstes Wellenmuster entsteht, indem eine Sendestruktur direkt in den Vorausbereich eines Fahrzeugs strahlt. Dieses wird überlagert mit einem zweiten Wellenmuster, das dadurch entsteht, dass die vom Fahrzeug ausgesendeten Wellen teilweise in Richtung der Fahrbahnoberfläche ausgesendet werden und von dort in den Vorausbereich des Fahrzeugs reflektiert werden. Die Analyse des sich so ergebenden Interferenzmusters erlaubt Aussagen zu Entfernung und/oder Höhe eines Objekts im Vorausbereich des Fahrzeugs.

In der US 6,404,328 B1 wird ebenfalls vorgeschlagen, ein für die Erfassung der horizontalen Winkellagen geeignetes Radarsystem im Wesentlichen unverändert zu lassen und die empfangenen Signale zu analysieren, um Aussagen zur vertikalen Winkellage machen zu können. Das aus der US 6,404,328 B1 bekannte Verfahren sieht vor, Informationen zur vertikalen Ausdehnung oder Winkellage eines Objekts dadurch gewinnen zu können, dass die Änderung von empfangenen Radarwellen in einem Zeitfenster analysiert wird und die Art der Änderung Aufschluss über den Bewegungszustand des erfassten Objekts gibt.

Die genannten Auswerteverfahren haben den Nachteil, dass eine vergleichsweise hohe Rechenleistung benötigt wird und trotzdem die erreichbare Genauigkeit hohen Anforderungen nicht genügt.

Aus der US2004/0164892 bzw. der DE 602 05 711 T2 ist ein Radarsystem bekannt geworden, bei dem zur Vergrößerung bzw. Verkleinerung des Winkels der Strahlenform in horizontaler Richtung Antennenelemente zugeschalten bzw. abgeschalten werden.

Weitere, ähnliche Radarsysteme sind aus der US 6 266 010B1, US2004/119633 A1 und der WO 2004/051308 A bekannt geworden.

Aus der US 5,815,112 ist ein Radarsystem bekannt, mit dem die horizontale Winkellage und/oder Ausdehnung eines Objekts in der Umgebung eines Kraftfahrzeugs erfassbar ist. Die dort vorgeschlagenen Empfangsstrukturen weisen mehrere Reihen von Antennenstrukturen auf, die in ihrer Einbaulage im Kraftfahrzeug im Wesentlichen in vertikaler Richtung verlaufen. Durch Ab- und Zuschalten einer Antennenstruktur kann eine Empfangsstruktur mit variablen Eigenschaften gebildet werden. Nachteilig ist jedoch, dass dieser Sensor zur Erfassung von vertikalen Winkellagen und/oder Ausdehnungen von Objekten nicht geeignet ist und bedingt durch die Vielzahl von Antennenstrukturen verhältnismäßig groß ist, was dem unauffälligen Einbau in einem Kraftfahrzeug abträglich ist.

Hiervon ausgehend ist es Aufgabe der Erfindung, ein Kraftfahrzeug-Radarsystem gemäß der US 5,815,112 derart weiterzubilden, dass bei kompakten Abmessungen des Kraftfahrzeug-Radarsystems eine genaue Bestimmung der vertikalen Winkellage und/oder Ausdehnung eines Objekts in der Umgebung eines Kraftfahrzeugs ermöglicht wird.

Diese Aufgabe wird mit einem Kraftfahrzeug-Radarsystem mit den Merkmalen des Anspruchs 1 gelöst.

Die separate Ansteuerung mindestens eines Antennenelements hat den Vorteil, dass die zur Erfassung der horizontalen Winkellage benötigten Antennenstrukturen erhalten bleiben können und lediglich durch Ansteuerung der ohnehin vorhandenen Antennenelemente ermöglicht wird, auch die vertikale Winkellage und/oder Ausdehnung eines Objekts zu bestimmen. Dies hat den Vorteil, dass keine weiteren Antennenstrukturen mit weiteren Antennenelementen benötigt werden, so dass das Kraftfahrzeug-Radarsystem nur einen kleinen Einbauraum benötigt. Weiterhin ist vorteilhaft, dass es nicht erforderlich ist, die Empfangssignale auszuwerten, die für die Erfassung der horizontalen winkellage bestimmt sind. Durch die separate Ansteuerbarkeit eines Antennenelements können die Empfangssignale auch ausschließlich im Hinblick auf die vertikale Winkellage ausgewertet werden.

Eine Ausgestaltung des Kraftfahrzeug-Radarsystems sieht vor, dass ein äußerstes Antennenelement oder die äußersten Antennenelemente mindestens einer Antennenstruktur separat ansteuerbar ist beziehungsweise sind. Die äußersten Antennenelemente sind in Einbaulage der Empfangsstruktur das oberste und das unterste Antennenelement einer Antennenstruktur. Durch separate Ansteuerung des obersten oder des untersten oder des obersten und des untersten Antennenelements können ausgesendete Radarwellen von einer veränderten Anzahl von Antennenelementen oder von anderen Antennenelementen einer Antennenstruktur empfangen werden. Somit können für den Empfang von ausgesendeten und von Objekten reflektierten Radarwellen für mehrere Sendevorgänge in ihrem Aufbau unterschiedliche Antennenstrukturen bereitgestellt werden, um die vertikale winkellage und/oder Ausdehnung eines Objekts zu bestimmen.

Die zur Erfassung der horizontalen Winkellage bekannten Empfangsstrukturen müssen in ihrem Aufbau nur leicht modifiziert werden. Beispielsweise kann vorgesehen sein, dass ein Schalter zur Ansteuerung eines Antennenelements vorgesehen ist. Diese Maßnahme bewirkt, dass wahlweise alle Antennenelemente einer Antennenstruktur angesteuert werden oder alle Antennenelemente einer Antennenstruktur abzüglich eines Antennenelements.

Es können auch mehrere Antennenelemente einer Antennenstruktur separat ansteuerbar sein, beispielsweise eine Gruppe von äußeren Antennenelementen. Für jedes der separat ansteuerbaren Antennenelemente kann ein eigener Schalter vorgesehen sein. Es können aber auch Gruppen von Antennenelementen zusammengefasst werden, wobei eine Gruppe durch jeweils einen Schalter ansteuerbar ist.

Für eine hohe Genauigkeit der Bestimmung der horizontalen Winkellage und/oder Ausdehnung eines Objekts ist es vorteilhaft, wenn die zueinander benachbarten Antennenstrukturen um ein Maß versetzt sind, das kleiner als das 2,5-fache der Wellenlänge der Radarstrahlung ist, insbesondere dem 0,5- bis 1,5-fachen der Wellenlänge der Radarstrahlung entspricht. Diese Maßnahme bewirkt, dass bei Auswertung der empfangenen Radarwellen mit einer Phasendifferenzmethode einerseits eine genügend hohe Auflösung erzielbar ist und andererseits die winkellagen der verschiedenen Objekte voneinander unterscheidbar sind. Bei Verwendung einer Frequenz von 24 GFz ist es also vorteilhaft, wenn die Versetzung der zueinander benachbarten Antennenstrukturen 0,625 bis 3,125 cm beträgt, um in horizontaler Winkellage eine gute Auflösung zu erzielen.

Die Erfindung betrifft auch ein Verfahren zum Betrieb eines Radarsystems. Dieses weist den beschriebenen, erfindungsgemäßen Aufbau auf und wird in folgender Art und Weise betrieben: Es wird ein erstes Sendesignal durch die Sendestruktur ausgesendet, dieses erste Empfangssignal wird durch die Empfangsstruktur empfangen, die Empfangsstruktur wird durch Änderung der Ansteuerung mindestens eines Antennenelements verändert, durch die Sendestruktur wird ein zweites Sendesignal ausgesendet, durch die veränderte Empfangsstruktur wird ein zweites Empfangssignal empfangen, bevor schließlich das erste und das zweite Empfangssignal zur Bestimmung von vertikaler Winkellage und/oder vertikaler Ausdehnung und/oder Entfernung von Objekten in der Umgebung des Kraftfahrzeugs ausgewertet werden.

Dieses Verfahren hat den Vorteil, dass die zur Erfassung der horizontalen winkellage ohnehin benötigte Empfangsstruktur lediglich anders angesteuert werden muss, um die Erfassung der vertikalen winkellage zu ermöglichen.

In vorteilhafter Weise beinhaltet die Veränderung der Empfangsstruktur das Ab- oder Zuschalten eines äußersten Antennenelements oder der äußeren Antennenelemente mindestens einer Antennenstruktur. Es können aber auch Gruppen von äußeren Antennenelementen mindestens einer Antennenstruktur in ihrer Ansteuerung verändert werden.

Es ist möglich, bei einem mehrfachen Durchlauf des erfindungsgemäßen verfahrens in einem Durchlauf ein erstes, äußerstes Antennenelement einer Antennenstruktur zuzuschalten und ein zweites, äußerstes Antennenelement dieser oder einer anderen Antennenstruktur abzuschalten und in einem folgenden Durchlauf das erste, äußere Antennenelement der Antennenstruktur abzuschalten und das zweite, äußere Antennenelement dieser oder einer anderen Antennenstruktur zuzuschalten. Das äußerste Antennenelement oder die äußeren Antennenelemente entsprechen in Einbaulage der Empfangsstruktur am Fahrzeug dem obersten und/oder dem untersten Antennenelement. Durch wechselseitiges Zu- und Abschalten des obersten und untersten Antennenelements einer Antennenstruktur kann diese in vertikaler Richtung in ihrem Aufbau verändert werden, so dass sich bereichsweise überlappende Empfangskeulen gebildet werden.

Es können auch bei einem mehrfachen Durchlauf des Verfahrens in einem Durchlauf die äußersten Antennenelemente mindestens einer Antennenstruktur zugeschaltet werden und in einem folgenden Durchlauf die äußersten Antennenelemente der Antennenstruktur abgeschaltet werden. Hierdurch wird die vertikale Ausdehnung der Antennenstruktur beeinflusst; diese ist bei Zuschalten der äußersten Antennenelemente größer, so dass eine relativ schmale Empfangskeule erzeugt wird. Bei Abschalten der äußersten Antennenelemente ist die durch die verbleibenden Antennenelemente erzeugte Empfangskeule breiter.

Die Auswertung der ersten und zweiten Empfangssignale beruht in vorteilhafter Weise auf einer Methode, die eine Analyse der Amplituden der Empfangssignale einbezieht. Geeignet sind Sequential Beam Lobing - Methoden, insbesondere die Amplitudendifferenzmethode.

Anstelle von äußersten Antennenelementen können auch Gruppen von äußeren Antennenelementen ab- und zugeschaltet werden, um den Aufbau der Antennenstruktur zu ändern.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegeben Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen, jeweils in schematischer Form:
- Figur 1: eine Draufsicht eines Kraftfahrzeugs mit einem Radarsystem zur Erfassung von Objekten in der Umgebung des Kraftfahrzeugs;
- Figur 2: eine Seitenansicht des Kraftfahrzeugs gemäß Figur 1;
- Figur 3: eine schematische Darstellung des Aufbaus des erfindungsgemäßen Radarsystems;
- Figur 4: eine schematische Ansicht der Empfangsstruktur des erfindungsgemäßen Radarsystems;
- Figur 5: eine Seitenansicht von mit dem Radarsystem erzeugbaren zueinander versetzten Empfangskeulen;
- Figur 6: eine Seitenansicht von mit dem Radarsystem erzeugbaren, verschieden breiten Empfangskeulen.

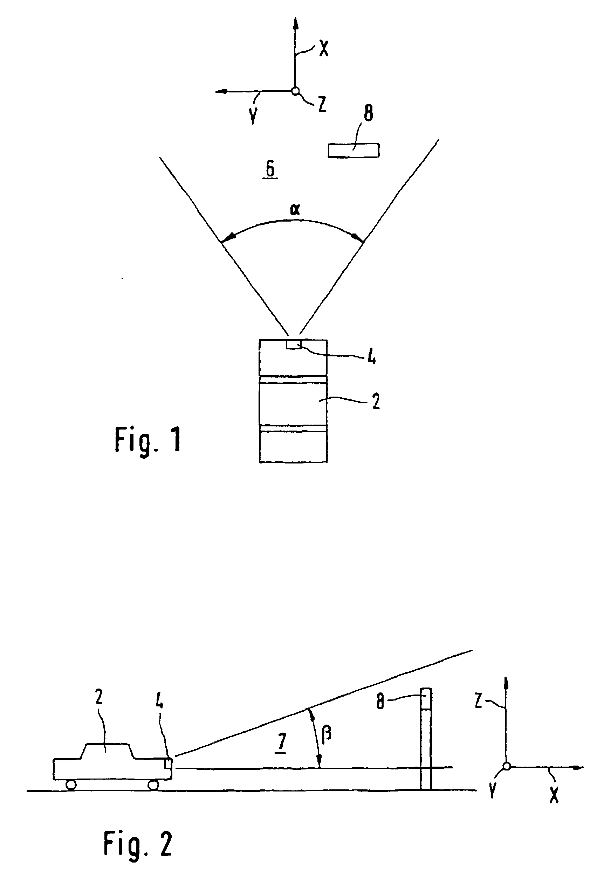

Figur 1 zeigt eine Draufsicht auf ein Kraftfahrzeug 2, an dessen vorderem Ende ein Radarsystem 4 angeordnet ist. Das Radarsystem 4 ist geeignet, in einem horizontalen Erfassungsbereich 6 Objekte 8 zu erfassen.

Dem Kraftfahrzeug 2 ist ein Koordinatensystem zugeordnet, wobei die X-Achse in Fahrzeuglängsrichtung verläuft und in Richtung auf den vorausbereich des Kraftfahrzeugs 2 weist. Die Y-Achse ist senkrecht zur X-Achse angeordnet und entspricht einer Querachse des Kraftfahrzeugs 2. Die Z-Achse ist senkrecht zur X- und zur Y-Achse angeordnet und entspricht der Hochachse des Kraftfahrzeugs 2.

Figur 2 zeigt das Kraftfahrzeug 2 mit dem Radarsystem 4, das in einem vertikalen Erfassungsbereich 7 geeignet ist, Objekte 8 zu erfassen.

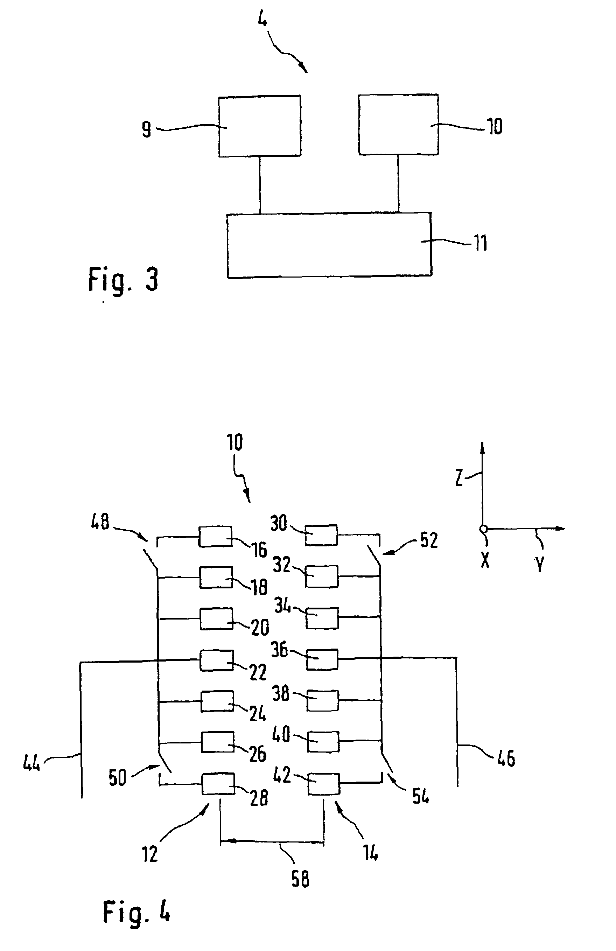

Gemäß Figur 3 weist das Radarsystem 4 eine Sendestruktur 9 und eine in Figur 4 detaillierter dargestellte Empfangsstruktur 10 auf. Die Sendestruktur 9 und die Empfangsstruktur 10 sind mit einer Auswerteeinheit 11 verbunden. Die Empfangsstruktur 10 umfasst zwei zueinander benachbarte Antennenstrukturen 12 und 14. Die Antennenstrukturen 12 und 14 sind bevorzugt an der Vorderseite des Kraftfahrzeugs 2 so angeordnet, dass die Antennenstrukturen 12 und 14 in der durch die Y- und die Z-Achse aufgespannten Ebene oder einer dazu parallelen Ebene angeordnet sind. Die Antennenstrukturen 12 und 14 erstrecken sich bevorzugt in vertikaler Richtung, also parallel zur Z-Achse des Fahrzeugs 2. Abweichungen von den bevorzugten Anordnungen sind möglich. Ihr Einfluss auf die Strahlrichtungen kann zum Beispiel bei der Auswertung empfangener Signale kompensiert werden.

Jede Antennenstruktur 12 und 14 besteht aus einer Vielzahl von Antennenelementen. So weist die Antennenstruktur 12 die Antennenelemente 16 bis 28 und die Antennenstruktur 14 die Antennenelemente 30 bis 42 auf.

Die Antennenstrukturen 12 und 14 stehen über Leitungen 44 und 46 mit der Auswerteeinheit 11 in Verbindung.

Dem äußersten, obersten Antennenelement 16 der Antennenstruktur 12 ist ein Schalter 48 zugeordnet. Dem äußersten, untersten Antennenelement 28 der Antennenstruktur 12 ist ein Schalter 50 zugeordnet.

Das äußerste, oberste Antennenelement 30 der Antennenstruktur 14 ist über einen Schalter 52 separat ansteuerbar. Das äußerste, unterste Antennenelement 42 der Antennenstruktur 14 ist mit Hilfe eines Schalters 54 separat ansteuerbar.

Die Antennenstrukturen 12 und 14 sind in horizontaler Richtung entlang der Achse Y um ein Maß 58 versetzt, das z.B. der Hälfte der Wellenlänge der verwendeten Radarstrahlung entspricht. Andere Werte sind möglich, bevorzugt aus dem Intervall von 0,5 bis 2,5 mal der Wellenlänge der verwendeten Radarstrahlung.

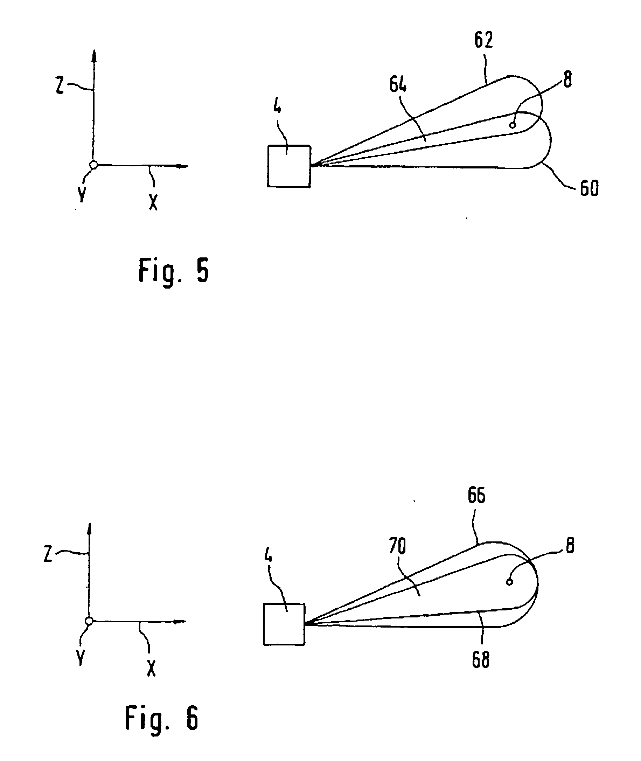

Um die vertikale Winkellage und/oder Ausdehnung eines Objekts 8 in der Umgebung des Kraftfahrzeugs 2 ermitteln zu können, kann die Empfangsstruktur 10 folgendermaßen angesteuert werden. Zunächst werden die Schalter 48 und 52 geöffnet, während die Schalter 50 und 54 geschlossen bleiben. Die Öffnung der Schalter 48 und 52 bewirkt, dass das Antennenelement 16 der Antennenstruktur 12 und das Antennenelement 30 der Antennenstruktur 14 nicht angesteuert werden. Mit Bezug auf Figur 5 bedeutet dies, dass mit Hilfe der Antennenelemente 18 bis 28 und 32 bis 42 eine untere Empfangskeule 60 erzeugbar ist.

In einem folgenden Schritt können die Schalter 48 und 52 geschlossen werden, wobei die Schalter 50 und 54 geöffnet werden. Somit können nunmehr die oberen sechs Antennenelemente 16 bis 26 der Antennenstruktur 12 und der Antennenelemente 30 bis 40 der Antennenstruktur 14 eine Empfangskeule ermöglichen, die mit Bezug auf Figur 5 als obere Empfangskeule 62 dargestellt ist.

In Figur 5 ist das Objekt 8 als Punkt dargestellt, der bspw. ein zu erfassendes Straßenschild symbolisiert. Im dargestellten Fall kann durch die Empfangskeule 60 ein erstes Empfangssignal erhalten werden und durch die Empfangskeule 62 ein zweites Empfangssignal. Die Empfangssignale haben eine Intensität, die davon abhängt, wo sich ein zu erfassendes Objekt innerhalb einer Empfangskeule befindet. Befindet sich ein Objekt in einer Mittellage einer Empfangskeule, wird ein Signal hoher Intensität empfangen. In Randlagen ist das Empfangssignal schwächer. Im vorliegenden Fall kann durch die Empfangskeulen 60 und 62 jeweils ein sehr schwaches Empfangssignal empfangen werden.

Die Auswerteeinheit 11 kann die Tatsache, dass für das in Figur 5 dargestellte Beispiel zwei Empfangssignale mit einer von "Null" abweichenden Intensität vorliegen, dahingehend verwerten, dass die Aussage getroffen werden kann, dass sich das zu erfassende Objekt im von den Empfangskeulen 60 und 62 gebildeten Überlappungsbereich 64 befindet. Um eine Aussage höherer Genauigkeit zu treffen, d.h. um die genaue Lage eines Objekts innerhalb des Überlappungsbereichs 64 angeben zu können, können auch die Intensitäten der Empfangssignale herangezogen werden.

Die Empfangsstruktur 10 kann auch folgendermaßen angesteuert werden: Zunächst werden alle vier Schalter 48, 50, 52 und 54 geöffnet. Hierdurch werden nur die inneren Antennenelemente 18 bis 26 der Antennenstruktur 12 und die Antennenelemente 32 bis 40 der Antennenstruktur 14 angesteuert. Durch die Verringerung der Anzahl der Antennenelemente entsteht eine breite Empfangskeule, die in Figur 6 mit Bezugszeichen 66 gekennzeichnet ist.

Unter Verwendung der Antennenelemente 18 bis 26 und 32 bis 40 kann so ein erstes Empfangssignal erhalten werden.

Durch Zuschalten der Antennenelemente 16, 28, 30 und 42 durch Schließen der Schalter 48, 50, 52 und 54 werden Antennenstrukturen 12 und 14 erzeugt, die jeweils sieben Antennenelemente aufweisen. Durch die Erhöhung der Anzahl der Antennenelemente wird eine Empfangskeule 68 erhalten, die vergleichsweise schmal ist. Die Empfangskeule 68 liegt innerhalb der Empfangskeule 65 und bildet mit dieser einen Überlappungsbereich 70.

Unter Verwendung aller Antennenelemente 16 bis 28 beziehungsweise 30 bis 42 kann ein zweites Empfangssignal aufgenommen werden.

In Figur 6 ist ein zu erfassendes Objekt 8 dargestellt. Im vorliegenden Fall werden für die Empfangskeulen 66 und 68 starke Empfangssignale erzeugt. Diese Signale können von der Auswerteeinheit 11 dahingehend ausgewertet werden, dass sich das zu erfassende Objekt 8 in der Mittellage beider Empfangskeulen befindet.

Es versteht sich, dass anstelle von Einzelschaltern 48, 50, 52 und 54 auch ein Schalter vorgesehen sein kann, der mehrere Antennenelemente gleichzeitig angesteuert, beispielsweise die Antennenelemente 16, 28, 30 und 42.

Es ist auch möglich, die Antennenelemente "diagonal" anzusteuern. So können in einem ersten Durchlauf die Schalter 52 und 50 geschlossen werden, während die Schalter 48 und 54 geöffnet bleiben. In einem folgenden Durchlauf können die Schalter 48 und 54 geschlossen werden und die Schalter 50 und 52 geöffnet. Die hierdurch gewonnenen Empfangssignale können ebenfalls im Hinblick auf die vertikale Winkellage 7 eines Objekts 8 ausgewertet werden. Diese Signale enthalten jedoch auch Informationen zur horizontalen Winkellage des Objekts 8 im horizontalen Erfassungsbereich 6.

Es können auch die Empfangssignale nur einer einzigen Antennenstruktur, bspw. der Antennenstruktur 12, ausgewertet werden. In diesem Fall kann die Antennenstruktur 12 nur einen einzigen Schalter 48 oder mehrere Schalter, bspw. Schalter 48 und 50 aufweisen. Die Schalter 52 und 54 der Antennenstruktur 14 werden dann nicht benötigt.

Bevorzugt ist jedoch, beide Antennenstrukturen 12 und 14 anzusteuern, um die Empfangssignale sowohl im Hinblick auf die horizontale als auch im Hinblick auf die vertikale Winkellage und/oder Ausdehnung eines Objekts auswerten zu können.

## Patentansprüche

1. Kraftfahrzeug-Radarsystem (4) zur Bestimmung von Winkellage und/oder Ausdehnung und/oder Entfernung von Objekten (8) in der Umgebung eines Kraftfahrzeugs (2), mit mindestens einer Sendestruktur (9) und mit mindestens einer Empfangsstruktur (10), wobei die Empfangsstruktur (10) zur Erfassung der horizontalen Winkellage (6) und/oder Ausdehnung eines Objekts (8) in der Umgebung des Kraftfahrzeugs (2) mindestens zwei im Wesentlichen parallel zueinander angeordnete, benachbarte Antennenstrukturen (12, 14) aufweist, wobei jede Antennenstruktur (12, 14) mindestens zwei zueinander versetzte Antennenelemente (16...28, 30...42) aufweist, wobei zur Auswertung von Empfangssignalen eine Auswerteeinheit (11) vorgesehen ist, **dadurch gekennzeichnet, dass** zur Erfassung der vertikalen Winkellage (7) die äußersten Antennenelemente (16 und 28, 30 und 42) mindestens einer Antennenstruktur (12, 14) separat von anderen Antennenelementen (18...26, 32...40) dieser Antennenstruktur (12, 14) derart ansteuerbar sind, dass im Betrieb des Radarsystems (4) in einem ersten Durchlauf ein erstes, äußerstes Antennenelement (16, 30) einer Antennenstruktur (12, 14) zugeschaltet und ein zweites, äußerstes Antennenelement (28, 42) dieser oder einer anderen Antennenstruktur (12, 14) abgeschaltet wird und dass in einem folgenden Durchlauf das erste, äußere Antennenelement (16, 30) der Antennenstruktur (12, 14) abgeschaltet und das zweite, äußere Antennenelement (28, 42) dieser oder einer anderen Antennenstruktur (12, 14) zugeschaltet wird.

2. Kraftfahrzeug-Radarsystem (4) nach Anspruch 1, **dadurch gekennzeichnet, dass** ein Schalter (48, 50, 52, 54) zur Ansteuerung des jeweiligen Antennenelements (16, 28, 30, 42) vorgesehen ist.

3. Kraftfahrzeug-Radarsystem (4) nach mindestens einem der vorhergehenden Ansprüche, **dadurch gekennzeichnet, dass** anstelle von den äußersten Antennenelementen (16, 28, 30, 42) mindestens eine Gruppe von äußeren Antennenelementen mindestens einer Antennenstruktur (12, 14) separat ansteuerbar ist.

4. Kraftfahrzeug-Radarsystem (4) nach Anspruch 3, **dadurch gekennzeichnet, dass** ein Schalter zur Ansteuerung einer Gruppe von Antennenelementen vorgesehen ist.

5. Kraftfahrzeug-Radarsystem (4) nach mindestens einem der vorhergehenden Ansprüche, **dadurch gekennzeichnet, dass** die zueinander benachbarten Antennenstrukturen (12, 14) um ein Maß (58) versetzt sind, das kleiner als das 2,5-fache der Wellenlänge der Radarstrahlung ist, insbesondere dem 0,5- bis 1,5-fachen der Wellenlänge der Radarstrahlung entspricht.

6. Verfahren zum Betrieb eines Radarsystems (4) nach einem der vorhergehenden Ansprüche, **gekennzeichnet durch** die folgenden Schritte:
a. Aussenden eines ersten Sendesignals **durch** die Sendestruktur,
b. Empfang eines ersten Empfangssignals **durch** die Empfangsstruktur (10),
c. Veränderung der Empfangsstruktur (10) **durch** Änderung der Ansteuerung mindestens eines Antennenelements (16, 28, 30, 42),
d. Aussenden eines zweiten Sendesignals **durch** die Sendestruktur,
e. Empfang eines zweiten Empfangssignals **durch** die veränderte Empfangsstruktur (10),
f. Auswertung des ersten und zweiten Empfangssignals zur Bestimmung von vertikaler Winkellage (7) und/oder vertikaler Ausdehnung und/oder Entfernung von Objekten (8) in der Umgebung des Kraftfahrzeugs (2),
g. wobei bei einem mehrfachen Durchlauf des Verfahrens die Veränderung der Empfangsstruktur (10) gemäß c. derart erfolgt, dass in einem Durchlauf ein erstes, äußerstes Antennenelement (16, 30) einer Antennenstruktur (12, 14) zugeschaltet und ein zweites, äußerstes Antennenelement (28, 42) dieser oder einer anderen Antennenstruktur (12, 14) abgeschaltet wird und in einem folgenden Durchlauf das erste; äußere Antennenelement (16, 30) der Antennenstruktur (12, 14) abgeschaltet und das zweite, äußere Antennenelement (28, 42) dieser oder einer anderen Antennenstruktur (12, 14) zugeschaltet wird.

7. Verfahren nach Anspruch 6, **dadurch gekennzeichnet, dass** die Auswertung des ersten und zweiten Empfangssignals auf einer Methode beruht, die eine Analyse der Amplituden der Empfangssignale einbezieht.

8. Verfahren nach einem der Ansprüche 6 oder 7, **dadurch gekennzeichnet, dass** anstelle von äußersten Antennenelementen (16, 28, 30, 42) Gruppen von äußeren Antennenelementen ab- und zugeschaltet werden.

## Claims

1. Motor vehicle radar system (4) for determining the angular position and/or extent and/or distance of objects (8) in the surroundings of a motor vehicle (2), having at least one transmitting structure (9) and having at least one receiving structure (10), wherein the receiving structure (10) has, for the purpose of sensing the horizontal angular position (6) and/or extent of an object (8) in the surroundings of the motor vehicle (2), at least two adjacent antenna structures (12, 14) which are arranged essentially parallel to one another, wherein each antenna structure (12, 14) has at least two antenna elements (16 ... 28, 30 ... 42) which are offset from one another, wherein an evaluation unit (11) is provided for evaluating reception signals, **characterized in that**, in order to sense the vertical angular position (7), the outermost antenna elements (16 and 28, 30 and 42) of at least one antenna structure (12, 14) can be actuated separately from other antenna elements (18 ... 26, 32 ... 40) of this antenna structure (12, 14) in such a way that during the operation of the radar system (4) in a first pass, a first outermost antenna element (16, 30) of an antenna structure (12, 14) is activated, and a second outermost antenna element (28, 42) of this antenna structure or of another antenna structure (12, 14) is deactivated, and **in that** in a subsequent pass the first outer antenna element (16, 30) of the antenna structure (12, 14) is deactivated and the second outer antenna element (28, 42) of this antenna structure or of another antenna structure (12, 14) is activated.

2. Motor vehicle radar system (4) according to Claim 1, **characterized in that** a switch (48, 50, 52, 54) is provided for actuating the respective antenna element (16, 28, 30, 42).

3. Motor vehicle radar system (4) according to at least one of the preceding claims, **characterized in that** instead of the outermost antenna elements (16, 28, 30, 42) at least one group of outer antenna elements of at least one antenna structure (12, 14) can be actuated separately.

4. Motor vehicle radar system (4) according to Claim 3, **characterized in that** a switch is provided for actuating a group of antenna elements.

5. Motor vehicle radar system (4) according to at least one of the preceding claims, **characterized in that** the antenna structures (12, 14) which are adjacent to one another are offset by a measure (58) which is smaller than 2.5 times the wavelength of the radar radiation, in particular corresponds to 0.5 to 1.5 times the wavelength of the radar radiation.

6. Method for operating a radar system (4) according to one of the preceding claims, **characterized by** the following steps:
a. emission of a first transmission signal by the transmitting structure,
b. reception of a first reception signal by the receiving structure (10),
c. changing of the receiving structure (10) by changing the actuation of at least one antenna element (16, 28, 30, 42),
d. emission of a second transmission signal by the transmitting structure,
e. reception of a second reception signal by the changed receiving structure (10),
f. evaluation of the first and second reception signals in order to determine the vertical angular position (7) and/or vertical extent and/or distance of objects (8) in the surroundings of the motor vehicle (2),
g. wherein in the case of a multiple pass of the method, the changing of the receiving structure (10) according to c. takes place in such a way that in one pass a first outermost antenna element (16, 30) of an antenna structure (12, 14) is activated and a second outermost antenna element (28, 42) of this antenna structure or of another antenna structure (12, 14) is deactivated, and in a subsequent pass the first outer antenna element (16, 30) of the antenna structure (12, 14) is deactivated and the second outer antenna element (28, 42) of this antenna structure or of another antenna structure (12, 14) is activated.

7. Method according to Claim 6, **characterized in that** the evaluation of the first and second reception signals is based on a method which includes analysis of the amplitudes of the reception signals.

8. Method according to one of Claims 6 or 7, **characterized in that** instead of outermost antenna elements (16, 28, 30, 42), groups of outer antenna elements are deactivated and activated.

## Revendications

1. Système radar (4) pour véhicule automobile destiné à déterminer la position angulaire et/ou l'étendue et/ou l'éloignement d'objets (8) dans l'environnement d'un véhicule automobile (2), comprenant au moins une structure d'émission (9) et comprenant au moins une structure de réception (10), la structure de réception (10) présentant au moins deux structures d'antenne (12, 14) voisines disposées pour l'essentiel parallèlement l'une à l'autre en vue de détecter la position angulaire horizontale (6) et/ou l'étendue d'un objet (8) dans l'environnement du véhicule automobile (2), chaque structure d'antenne (12, 14) présentant au moins deux éléments d'antenne (16 ... 28, 30 ... 42) décalés l'un par rapport à l'autre, une unité d'interprétation (11) étant prévue pour interpréter les signaux reçus, **caractérisé en ce que** pour détecter la position angulaire verticale (7), les éléments d'antenne les plus à l'extérieur (16 et 28, 30 et 42) d'au moins une structure d'antenne (12, 14) peuvent être commandés séparément des autres éléments d'antenne (18 ... 26, 32 ... 40) de cette structure d'antenne (12, 14) de telle sorte que lors du fonctionnement du système radar (4), au cours d'un premier cycle, un premier élément d'antenne le plus à extérieur (16, 30) d'une structure d'antenne (12, 14) est mis en circuit et un deuxième élément d'antenne le plus à extérieur (28, 42) de cette structure d'antenne (12, 14) ou d'une autre est mis hors circuit et qu'au cours d'un cycle suivant, le premier élément d'antenne extérieur (16, 30) de la structure d'antenne (12, 14) est mis hors circuit et le deuxième élément d'antenne extérieur (28, 42) de cette structure d'antenne (12, 14) ou d'une autre est mis en circuit.

2. Système radar (4) pour véhicule automobile selon la revendication 1, **caractérisé en ce qu'**il est prévu un commutateur (48, 50, 52, 54) pour commander l'élément d'antenne (16, 28, 30, 42) correspondant.

3. Système radar (4) pour véhicule automobile selon au moins l'une des revendications précédentes, **caractérisé en ce qu'**au moins un groupe d'éléments d'antenne extérieurs d'au moins une structure d'antenne (12, 14) peut être commandé séparément à la place des éléments d'antenne les plus à l'extérieur (16, 28, 30, 42).

4. Système radar (4) pour véhicule automobile selon la revendication 3, **caractérisé en ce qu'**il est prévu un commutateur pour commander un groupe d'éléments d'antenne.

5. Système radar (4) pour véhicule automobile selon au moins l'une des revendications précédentes, **caractérisé en ce que** les structures d'antenne (12, 14) voisines l'une de l'autre sont décalées d'une cote (58) qui est plus petite que 2,5 fois la longueur d'onde du rayonnement radar, notamment qui correspond à 0,5 à 1,5 fois la longueur d'onde du rayonnement radar.

6. Procédé de fonctionnement d'un système radar (4) selon l'une des revendications précédentes, **caractérisé par** les étapes suivantes :
a. émission d'un premier signal émis par la structure d'émission,
b. réception d'un premier signal reçu par la structure de réception (10),
c. modification de la structure de réception (10) en modifiant la commande d'au moins un élément d'antenne (16, 28, 30, 42),
d. émission d'un deuxième signal émis par la structure d'émission,
e. réception d'un deuxième signal reçu par la structure de réception (10) modifiée,
f. interprétation du premier et du deuxième signal reçu en vue de déterminer la position angulaire verticale (7) et/ou l'étendue verticale et/ou l'éloignement d'objets (8) dans l'environnement du véhicule automobile (2),
g. selon lequel la modification de la structure de réception (10) selon c. s'effectue au cours d'un cycle multiple du procédé de telle sorte qu'au cours d'un cycle, un premier élément d'antenne le plus à extérieur (16, 30) d'une structure d'antenne (12, 14) est mis en circuit et un deuxième élément d'antenne le plus à extérieur (28, 42) de cette structure d'antenne (12, 14) ou d'une autre est mis hors circuit et qu'au cours d'un cycle suivant, le premier élément d'antenne extérieur (16, 30) de la structure d'antenne (12, 14) est mis hors circuit et le deuxième élément d'antenne extérieur (28, 42) de cette structure d'antenne (12, 14) ou d'une autre est mis en circuit.

7. Procédé selon la revendication 6, **caractérisé en ce que** l'interprétation du premier et du deuxième signal reçu se base sur une méthode qui inclut une analyse des amplitudes des signaux reçus.

8. Procédé selon l'une des revendications 6 ou 7, **caractérisé en ce que** des groupes d'éléments d'antenne extérieurs sont mis hors circuit et en circuit à la place des éléments d'antenne les plus à l'extérieur (16, 28, 30, 42).
